(19) Europäisches Patentamt
European Patent Office
Office européen des brevets

(11) **EP 2 849 136 A1**

(12) **EUROPEAN PATENT APPLICATION**

(43) Date of publication:
**18.03.2015 Bulletin 2015/12**

(51) Int Cl.:
***G06Q 20/40*** *(2012.01)*

(21) Application number: **13290218.0**

(22) Date of filing: **12.09.2013**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | (72) Inventor: **Canis, Laure**<br>**06300 Nice (FR)**<br><br>(74) Representative: **Samson & Partner**<br>**Widenmayerstraße 5**<br>**80538 München (DE)** |
| (71) Applicant: **Amadeus S.A.S.**<br>**06410 Biot (FR)** | |

(54) **Auditing rules optimizer**

(57)     Methods, systems, and computer program products for determining when to audit a transaction. An auditing rules optimizer system receives data relating to a transaction conducted by a first business entity that includes a travel product provided by a second business entity. The transaction may be classified as being a type of transaction, and the determination whether to audit the transaction based on the transaction type. The system may also determine expected values of blocking the transaction and/or taking an action to recover a discrepancy. The system may then determine which action to take based on the expected values. Auditing may be performed on transactions by travel agencies and on interline billing between validating and operating carriers. In each case, empirical data from earlier audit periods may be used to adjust parameters used to identify which transactions to audit, and for determining the expected values of the audit actions.

FIG. 3

**Description**

TECHNICAL FIELD

The invention generally relates to computers and computer software, and in particular to methods, systems, and computer program products for determining an expected value of an action relating to an audit of a transaction.

BACKGROUND

In the travel industry, airline tickets are often sold through an indirect seller, such as an online travel agency or a validating carrier. The indirect seller will typically check for available flights that satisfy a traveler's itinerary and, once matching flights are found, book the flights for the traveler. As part of this booking process, the indirect seller may collect payment from the traveler for the tickets. To cover an operating carrier's charges for providing transportation services, the indirect seller will then provide a portion of the collected payment to the operating carrier.

To ensure that indirect sellers are selling tickets in compliance with restrictions and rules relating to pricing of the ticket, these transactions may occasionally be audited. An audit may verify whether the amounts of the fare, taxes, and commission match the restrictions and rules in place regarding the details of the ticket sold. If, for example, the audit indicates that the indirect seller did not properly compensate the operating carrier, the operating carrier may be able to recover the shortfall from the indirect seller. Because of the magnitude of the annual worldwide revenue of the airline industry, correcting even small discrepancies across all tickets sold could result in a significant recovery of otherwise lost revenue.

When an audit indicates that a travel agency or validating carrier has not properly charged for a product, the operating carrier may simply ignore the discrepancy, or may attempt to recover the discrepancy by issuing an agency debit memo or interline bill, as the case may be. If the indirect seller disputes the charge, the operating carrier may decide to either take no action (thus abandoning the effort to recover the discrepancy) or generate an inquiry. Airlines typically make these decisions either based on empirical evidence or based on the value of the discrepancy without significant objective analysis of the costs involved.

Thus, improved systems, methods, and computer program products for determining when to audit transactions and for analyzing transaction audit results are needed that assist in managing transaction auditing, and to optimize operator utilization and net revenues recovered by the auditing party.

SUMMARY

In an embodiment of the invention, a method of selecting which transactions of a plurality of transactions to audit is provided. The method includes receiving data relating to a transaction at a computer. The transaction may be a transaction conducted by a first business entity that relates to a travel product provided by a second business entity. The method may include parsing the data into a plurality of parameters, each parameter having a value that defines a characteristic of the transaction. In response to the plurality of parameters matching a first set of parameters corresponding to a first transaction type, the transaction may be classified as being of the first transaction type. In response to the plurality of parameters matching a second set of parameters corresponding to a second transaction type, the transaction may be classified as being of the second transaction type. The method may further include determining whether to audit the transaction based at least in part on whether the transaction is classified as the first transaction type or the second transaction type.

In another embodiment of the invention, an apparatus is provided that includes a processor and a memory. The memory includes instructions that, when executed by the processor, cause the apparatus to receive the data relating to the transaction conducted by the first business entity and relating to the travel product provided by the second business entity. The instructions may further cause the apparatus to parse the data into the plurality of parameters. In response to the plurality of parameters matching the first set of parameters, the instructions may cause the apparatus to classify the transaction as the first transaction type. In response to the plurality of parameters matching the second set of parameters, the instructions may cause the apparatus to classify the transaction as the second transaction type. The instructions may then cause the apparatus to determine whether to audit the transaction based at least in part on whether the transaction is classified as the first transaction type or the second transaction type.

In another embodiment of the invention, a computer program product is provided that includes a non-transitory computer readable storage medium including instructions. The instructions may be configured, when executed by a processor, to cause the processor to receive the data relating to the transaction conducted by the first business entity and relating to the travel product provided by the second business entity. The instructions may further cause the processor to parse the data into the plurality of parameters. In response to the plurality of parameters matching the first set of parameters, the instructions may cause the processor to classify the transaction as the first transaction type. In response to the plurality of parameters matching the second set of parameters, the instructions may cause the processor to classify the transaction as the second transaction type. The instructions may then cause the processor to determine whether to audit the transaction based at least in part on whether the transaction is classified as the first transaction type or the second transaction type.

In another embodiment of the invention, a method of optimizing revenue for a transaction being conducted by the first business entity and relating to the travel product provided by the second business entity is provided. The method includes receiving data relating to the transaction at the computer, the data including data indicative of a first amount being quoted for the travel product by the first business entity. In response to the first amount being less than a second amount charged for the travel product by the second business entity, the method may determine a first expected value of blocking the transaction. The method may then determine a first difference equal to the first expected value minus the first amount, and in response to the first difference being greater than a threshold, block the transaction.

In another embodiment of the invention, an apparatus is provided that includes a processor and a memory. The memory includes instructions that, when executed by the processor, cause the apparatus to receive the data relating to the transaction, the data including the data indicative of the first amount being quoted for the travel product by the first business entity. In response to the first amount being less than the second amount charged for the travel product by the second business entity, the instructions may cause the apparatus to determine the first expected value of blocking the transaction. The apparatus may then determine the first difference equal to the first expected value minus the first amount, and in response to the first difference being greater than the threshold, block the transaction.

In another embodiment of the invention, a computer program product is provided that includes a non-transitory computer readable storage medium including instructions. The instructions may be configured, when executed by the processor, to cause the processor to receive the data relating to the transaction, the data including the data indicative of the first amount being quoted for the travel product by the first business entity. In response to the first amount being less than the second amount charged for the travel product by the second business entity, the instructions may cause the processor to determine the first expected value of blocking the transaction. The processor may then determine the first difference equal to the first expected value minus the first amount, and in response to the first difference being greater than the threshold, block the transaction.

In another embodiment of the invention, a method of interline auditing from the perspective of a validating carrier is provided. The method includes receiving data at the computer, the data relating to an interline bill for a first amount received from an operating carrier. The method further includes determining a probability that a rejection memo will not be disputed by the operating carrier and determining a second amount equal to a cost of issuing the rejection memo divided by the probability. In response to the first amount exceeding the second amount by a discrepancy, the method may further include causing the rejection memo to be issued to the operating carrier.

In another embodiment of the invention, an apparatus is provided that includes a processor and a memory. The memory includes instructions that, when executed by the processor, cause the apparatus to receive the data relating to the interline bill for the first amount from the operating carrier. The instructions may further cause the apparatus to determine the probability that the rejection memo will not be disputed by the operating carrier and the second amount equal to the cost of issuing the rejection memo divided by the probability. In response to the first amount exceeding the second amount by the discrepancy, the instructions may cause the apparatus to cause the rejection memo to be issued to the operating carrier.

In another embodiment of the invention, a computer program product is provided that includes a non-transitory computer readable storage medium including instructions. The instructions may be configured, when executed by the processor, to cause the processor to receive the data relating to the interline bill for the first amount from the operating carrier. The instructions may further cause the processor to determine the probability that the rejection memo will not be disputed by the operating carrier and the second amount equal to the cost of issuing the rejection memo divided by the probability. In response to the first amount exceeding the second amount by the discrepancy, the instructions may cause the processor to cause the rejection memo to be issued to the operating carrier.

In another embodiment of the invention, another method of interline auditing from the perspective of an operating carrier is provided. The method includes receiving data at the computer, the data relating to the rejection memo sent by a validating carrier in response receiving the interline bill for the first amount from the operating carrier. The method determines a first probability that a rejection memo inquiry will be disputed by the validating carrier, and a second probability that the interline bill is accurate and that the rejection memo inquiry based on the accurate interline bill will be disputed by the validating carrier. The method further determines a second amount equal to a cost of issuing the rejection memo inquiry divided by a sum of the first probability and the second probability. In response to the first amount exceeding the second amount by a discrepancy, the method causes the rejection memo inquiry to be issued to the validating carrier.

In another embodiment of the invention, an apparatus is provided that includes a processor and a memory. The memory includes instructions that, when executed by the processor, cause the apparatus to receive the data relating to the rejection memo sent by the validating carrier in response receiving the interline bill for the first amount from the operating carrier. The instructions may further cause the apparatus to determine the first probability that the rejection memo inquiry will be disputed by the validating carrier, and the second probability that the interline bill is accurate and that the rejection memo inquiry based on the accurate interline bill will be disputed by the validating carrier. The instructions may then cause the apparatus to determine the second amount equal to the cost of issuing the rejection memo inquiry divided by the sum of the first probability and the second probability. In response to the first amount exceeding the second amount by the discrepancy, the instructions may cause apparatus to issue the rejection memo inquiry to the validating carrier.

In another embodiment of the invention, a computer program product is provided that includes a non-transitory computer readable storage medium including instructions. The instructions may be configured, when executed by the processor, to cause the processor to receive the data relating to the rejection memo sent by the validating carrier in response receiving the interline bill for the first amount from the operating carrier. The instructions may further cause the processor to determine the first probability that the rejection memo inquiry will be disputed by the validating carrier, and the second probability that the interline bill is accurate and that the rejection memo inquiry based on the accurate interline bill will be disputed by the validating carrier. The instructions may then cause the processor to determine the second amount equal to the cost of issuing the rejection memo inquiry divided by the sum of the first probability and the second probability. In response to the first amount exceeding the second amount by the discrepancy, the instructions may cause processor to issue the rejection memo inquiry to the validating carrier.

BRIEF DESCRIPTION OF THE DRAWINGS

The accompanying drawings, which are incorporated in and constitute a part of this specification, illustrate various embodiments of the invention and, together with the general description of the invention given above, and the detailed description of the embodiments given below, serve to explain the embodiments of the invention.

FIG. 1 is a diagrammatic view of an exemplary operating environment including a plurality of computer systems in communication via a network.

FIG. 2 is a diagrammatic view of an exemplary computer system of FIG. 1.

FIG. 3 is a diagrammatic view of a block diagram depicting an auditing rules optimizer system that may be hosted by one or more of the computer systems in FIG. 1.

FIG. 4 is a flow chart depicting an optimization process that may be executed by the auditing rules optimizer system of FIG. 3.

FIG. 5 is a diagrammatic view of an action flow diagram depicting actions that may be performed in association with interline billing between airlines.

FIG. 6 is a graphical view depicting a method for estimating a preventive effect that an action taken in one auditing period may have on pricing errors in a subsequent auditing period.

DETAILED DESCRIPTION

Embodiments of the invention may be implemented by a processing and database system, such as a Global Distribution System (GDS). The processing and database system may facilitate interconnections between indirect sellers of airline tickets and a plurality of computer reservation systems each associated with a travel service provider. In the context of air travel, the processing and database system may be configured allow travelers to book airline tickets and other travel products through indirect sales channels. These indirect sales channels may include online travel agencies and validating carriers selling tickets for services to be provided by an operating carrier. The indirect sellers may receive payment from the travelers for the booked tickets. The indirect sellers may then compensate the operating carrier for the cost of the service provided.

The processing and database system may include an auditing rules optimizer system that determines if the parties involved in the transaction have been properly compensated. The auditing rules optimizer system may be configured to determine if a completed transaction should be audited, if a pending online transaction should be blocked, and/or if a preventive action should be taken. The auditing rules optimizer system may make these determinations based on an estimated value of taking the action being considered. This estimated value may be determined based on empirical data collected for audits performed in previous audit periods. The empirical data may include data relating to the cost of taking the action, the expected revenue produced by taking the action, and estimates of a preventive effect that would be produced by taking the action. Actions may include preventive actions, such as e-mail campaigns and operator training, online actions such as blocking pending transactions, and offline actions such as issuing agency debit memos, interline bills, rejection memos, and inquiries.

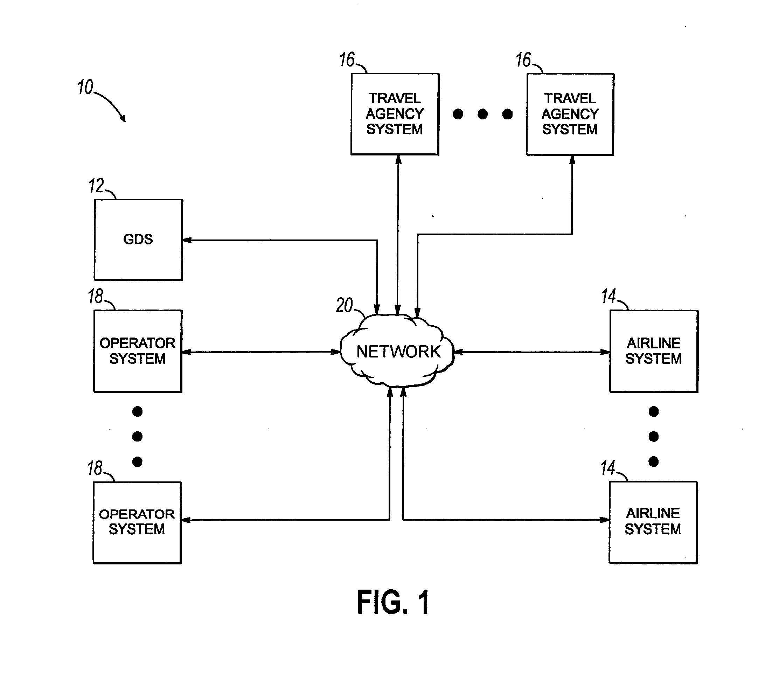

Referring now to FIG. 1, an operating environment 10 in accordance with an embodiment of the invention may include a Global Distribution System (GDS) 12, one or more airline systems 14, one or more travel agency systems 16, and one or more operator systems 18 that are in communication directly and/or via a network 20. The airline systems 14 may each include a Computer Reservation System (CRS) and/or billing system for the respective airline that enables the travel agency systems 16 and/or GDS 12 to reserve and pay for airline tickets. Airline systems 14 may also interact with each other, either directly or through the GDS 12, to enable a validating carrier to sell tickets for seats provided by the operating carrier. The operating carrier may then bill the validating carrier for the services provided. The network 20 may include one or more private and/or public networks (e.g., the Internet) that enable the exchange of data.

The GDS 12 may be configured to facilitate communication between the airline systems 14 and travel agency systems 16 by enabling travel agents, validating carriers, or other indirect sellers to book reservations on one or more airline systems 14 via the GDS 12. To this end, the GDS 12 may maintain links to each of the airline systems 14 via the network 20. These links may allow the GDS 12 to route reservation requests from the airline system 14 of the validating carrier and/or the travel agency system 16 to the corresponding airline system 14 for the operating carrier. The airline and travel agency systems 14, 16 may thereby book flights on multiple airlines via a single connection to the GDS 12. The GDS 12 may also store copies of Passenger Name Records (PNRs) generated by the airline systems 14. These copies may allow a PNR to be maintained by the GDS 12 that includes a complete set of flight data for an itinerary including air segments from multiple airlines.

The operator systems 18 may be in communication with the GDS 12 via the network 20 or some other suitable connection, and may provide system operators with a terminal or other suitable interface to the GDS 12. Operators may thereby communicate with the GDS 12 via the operator systems 18 and execute tasks relating to the auditing of transactions. The operators may also execute tasks relating to actions taken to recover discrepancies uncovered by the audits. To this end, modules hosted by the GDS 12 and/or other computer systems comprising the operating environment 10 may provide tasks to each operator system 18 for display to the operator. Each operator system 18 may also accept input from the operator to enable the operator to select and cause the displayed tasks to be executed by their respective systems.

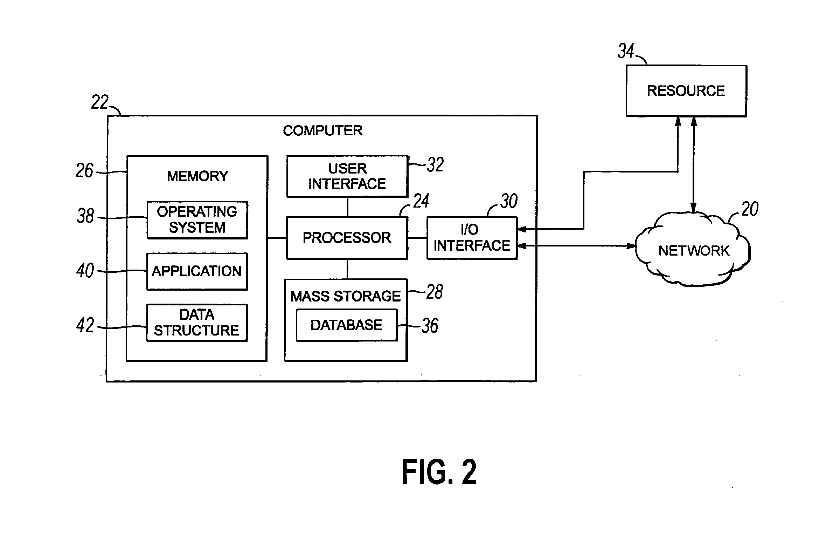

Referring now to FIG. 2, the GDS 12, airline systems 14, travel agency systems 16, and operator systems 18 of operating environment 10 may be implemented on one or more computer devices or systems, such as exemplary computer system 22. The computer system 22 may include a processor 24, a memory 26, a mass storage memory device 28, an input/output (I/O) interface 30, and a user interface 32. The computer system 22 may also be operatively coupled to one or more external resources 34 via the network 20 and/or I/O interface 30.

The processor 24 may include one or more devices selected from microprocessors, micro-controllers, digital signal processors, microcomputers, central processing units, field programmable gate arrays, programmable logic devices, state machines, logic circuits, analog circuits, digital circuits, or any other devices that manipulate signals (analog or digital) based on operational instructions that are stored in the memory 26. Memory 26 may include a single memory device or a plurality of memory devices including but not limited to read-only memory (ROM), random access memory (RAM), volatile memory, non-volatile memory, static random access memory (SRAM), dynamic random access memory (DRAM), flash memory, cache memory, or any other device capable of storing information. The mass storage memory device 28 may include data storage devices such as a hard drive, optical drive, tape drive, non-volatile solid state device, or any other device capable of storing information. A database 36 may reside on the mass storage memory device 28, and may be used to collect and organize data used by the various systems and modules described herein.

Processor 24 may operate under the control of an operating system 38 that resides in memory 26. The operating system 38 may manage computer resources so that computer program code embodied as one or more computer software applications, such as application 40 residing in memory 26, may have instructions executed by the processor 24. In an alternative embodiment, the processor 24 may execute the application 40 directly, in which case the operating system 38 may be omitted. One or more data structures 42 may also reside in memory 26, and may be used by the processor 24, operating system 38, and/or application 40 to store or manipulate data.

The I/O interface 30 may provide a machine interface that operatively couples the processor 24 to other devices and systems, such as the network 20 and/or external resource 34. The application 40 may thereby work cooperatively with the network 20 and/or external resource 34 by communicating via the I/O interface 30 to provide the various features, functions, and/or modules comprising embodiments of the invention. The application 40 may also have program code that is executed by one or more external resources 34, or otherwise rely on functions and/or signals provided by other system or network components external to the computer system 22. Indeed, given the nearly endless hardware and software configurations possible, persons having ordinary skill in the art will understand that embodiments of the invention may include applications that are located externally to the computer system 22, distributed among multiple computers or other external resources 34, or provided by computing resources (hardware and software) that are provided as a service over the network 20, such as a cloud computing service.

The user interface 32 may be operatively coupled to the processor 24 of computer system 22 in a known manner to allow a user to interact directly with the computer system 22. The user interface 32 may include video and/or alphanumeric displays, a touch screen, a speaker, and any other suitable audio and visual indicators capable of providing information to the user. The user interface 32 may also include input devices and controls such as an alphanumeric keyboard, a pointing device, keypads, pushbuttons, control knobs, microphones, etc., capable of accepting commands or input from the user and transmitting the entered input to the processor 24.

An airline ticket purchased through one of the airline or travel agency systems 14, 16 may involve booking, pricing, and ticketing the flight. Booking the flight may include checking the operating carrier inventory for availability of the flight. This check may include sending a booking request from the airline or travel agency system 14, 16 to the GDS 12, which may in turn query a corresponding airline system 14 for flight availability. If a seat is available for the requested flight, the flight may be booked and the operator carrier inventory decreased to reflect the booking. The flight may be priced by the travel agency or validating carrier - as the case may be - with the help of a fare engine, and the traveler's account billed accordingly. The ticketing process may include the travel agency or validating carrier reporting the sale of the ticket to the operating carrier's Billing and Settlement Plan (BSP) in the name of the operating carrier. In the United States, the Airline Reporting Corporation (ARC) normally provides this service. In any case, the BSP may act as a Business Process Outsourcer (BPO) that provides a clearing house that settles accounts between travel agencies, validating carriers, operating carriers, and any other business entity involved in the transaction. The operating carrier may thereby collect a fare via the BSP for providing the seat.

As part of the auditing process, an audit amount $C_A$ representing a fare that should have been charged for the ticket may be determined. The audit amount $C_A$ may be based on data relating to the ticket, such as a booking code, a class of service, an origination-destination city pair, a date of travel, or any other suitable data that defines parameters which characterize the ticket. This data may be used to determine if fare tariffs, business rules, routing maps, class of service tables, tax information, etc. were properly implemented by the indirect seller to determine the correct amount $C_A$ that should have been charged for the ticket. Business rules may include booking conditions such as minimum stay or advance purchase, and may be specific to a city pair and/or a class of service. Auditing conducted by the operating carrier to verify that the indirect seller sold the ticket for the correct amount is commonly referred to as "outward auditing". The system may also be used to determine if the operating carrier has billed the indirect seller for the correct amount. This type of auditing is commonly referred to as "inward auditing".

In the case of outward auditing, the system may compare the actual fare charged by the indirect seller to a fare that should have been charged for the ticket. For inward audits, the audit module may compare the amount billed by the operating carrier to a prorated amount to which the operating carrier is entitled. In either case, if a discrepancy $V$ exists relative to the audit amount $C_A$, the auditing party may take steps to recover the discrepancy. These steps may include issuing an agency debit memo to the travel agency, issuing an interline bill to the validating carrier (i.e., interline outward billing), or issuing a rejection memo to the operating carrier (i.e., interline inward billing). Methods, systems, and computer program products for issuing and managing agency debit memos are described in more detail in U.S. Patent Application Ser. No. 13/926,136, entitled "OPTIMIZING GENERATION OF AGENCY DEBIT MEMOS", Attorney Docket No. AMS-143US, the disclosure of which is incorporated herein by reference in its entirety for all purposes.

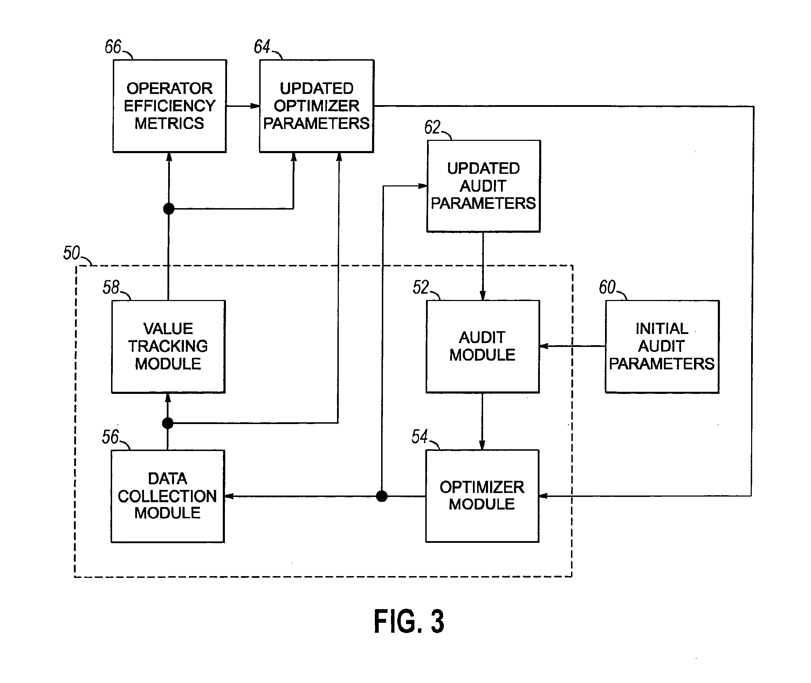

Referring now to FIG. 3, an auditing rules optimizer system 50 may include an audit module 52, an optimizer module 54, a data collection module 56, and a value tracking module 58. For each audited transaction, the auditing rules optimizer system 50 may take or recommend taking one or more actions. In the case of a completed transaction, the optimizer system may recommend taking an offline remediation action to recover an identified discrepancy $V$. Offline remediation actions may include issuing an agency debit memo, issuing an interline bill, issuing a rejection memo, instigating an inquiry into a dispute or rejection memo, or any other suitable action. In the case of a pending transaction, the auditing rules optimizer system 50 may recommend taking an online preventive action, such as blocking the pending transaction. The auditing rules optimizer system 50 may also recommend taking a preventive action, such as initiation of an e-mail campaign to reduce fraud or mistakes, or providing additional agent training.

To this end, the auditing rules optimizer system 50 may be configured to receive initial audit parameters 60, updated audit parameters 62, and updated optimizer parameters 64 from one or more sources, such as the GDS 12 or the operator system 18. These parameters 60, 62, 64 may be used to adjust the operation of the auditing rules optimizer system 50 so that the system 50 may be adapted to changing conditions. The initial audit parameters 60, updated audit parameters 62, and updated optimizer parameters 64 may be based on empirical data provided by the optimizer module 54, data collection module 56, and/or value tracking module 58 of auditing rules optimizer system 50. The parameters 60, 62, 64 may be stored in and/or received from a computer system, database, and/or network, and may include data entered by a system operator.

The audit module 52 may evaluate transactions and determine which transactions to audit based on an expected value of performing the audit. For example, a transaction may be selected for auditing in response to the expected value of performing the audit exceeding a threshold. This expected value may be determined based on characteristics of the transaction to be audited and/or on audit parameters determined from empirical data collected by the data collection module 56. The audit module 52 may also be configured to identify and audit transactions that belong to one or more groups of transactions that have been selected for auditing. In the case of online transactions, the audit module 52 may determine an expected value of blocking the transaction. If the expected value of blocking the online transaction is greater than the expected value of allowing the transaction to occur, the auditing rules optimizer system 50 may cause the transaction to be blocked.

If the audit module 52 determines that a discrepancy exists in an offline transaction, the optimizer module 54 may then determine an optimal action to be taken. Actions may include, but are not limited to: (1) do nothing and allow the discrepancy to go uncollected; (2) issue an agency debit memo; (3) issue an interline bill; (4) issue a rejection memo; and (5) inquire into a received dispute or a rejection memo. The optimizer module 54 may also schedule tasks related to taking actions based on deadlines for issuing agency debit memos, interline bills, rejection memos, and inquiries. This scheduling may take into account operator staffing levels as well as the expected value of taking the action, with higher value tasks being scheduled with a higher priority than lower value tasks.

The initial and updated audit parameters 60, 62 may be provided to the audit module 52, and may include data useful for determining an expected value of: (1) issuing an agency debit memo based on a discrepancy $V$ identified by the audit module 52; (2) the operating carrier auditing a ticket sold by the validating carrier - i.e., performing an "outward audit"; (3) the validating carrier auditing an interline bill received from the operating carrier - i.e., performing an "inward audit"; (4) blocking an online transaction, such as an airline ticket being sold by an online travel agency; and (5) performing a preventive action, such as the e-mail campaign or additional operator training.

The audit module 52 may analyze transactions selected for auditing, such as sales of airline tickets by an indirect seller, interline bills, and/or rejection memos, and determine an expected value of taking an action to recover the discrepancy $V$. This expected value may be determined based on characteristics of the transaction using the initial and/or updated audit parameters 60, 62 to define data processing functions. The audit parameters 60, 62 may include known or estimated probabilities of possible outcomes of the audit, and costs associated with the audit process. Initial audit parameters 60 may be provided to the audit module 52 at system startup to provide the audit module 52 with working values until updated audit parameters 62 are available. The updated audit parameters 62 may be loaded into the audit module 52 periodically, such as at the end of an audit period. An audit period may be any suitable period of time, such as a month or a year. The updated audit parameters 62 may be determined based on empirical data provided by the optimizer module 54. This empirical data may also be captured by the data collection module 56 for use by the value tracking module 58 in determining the updated optimizer parameters 64. The value tracking module 58 may use the empirical data captured by the data collection module 56 to determine additional updated optimizer parameters 64 as well as the operator efficiency metrics 66.

Audit parameters 60, 62 that may be useful for determining an expected value of an action may include data defining a probability A that the audit amount $C_A$ is accurate. That is, the probability $A$ that the audit amount $C_A$ is equal to the correct amount $C_T$ that should have been charged for the ticket. Additional audit parameters may include data defining a probability $P_D$ that an action (e.g., agency debit memo, interline bill, or rejection memo) will be disputed by the receiving party; a probability $P_R$ that the receiving party will dispute the action if the action is issued based on an accurate audit amount $C_A$; a probability $P_W$ that the receiving party will dispute the action if the action is issued based on an inaccurate audit amount $C_A$; an estimated cost $C_F$ of issuing a first action (e.g., agency debit memo, interline bill, or rejection memo); and an estimated cost $C_I$ of issuing an inquiry or other type of dispute in response to receiving an action. The values of the audit parameters 60, 62 may vary depending on the type of action in question and/or the identities of the business entities involved. For example, the probability $P_R$ that the validating carrier will issue a rejection memo in response receiving an interline bill from an operating carrier based on an accurate audit amount $C_A$ may be different than the probability $P_R$ that the travel agency will dispute an agency debit memo issued based on an accurate audit amount $C_A$.

The audit module 52 may also be configured to receive data relating to a pending online transaction, such as the sale of an airline ticket by an online travel agency or validating carrier. In response to the audit module 52 determining that a positive discrepancy $V$ exists between the audit amount $C_A$ and the amount being charged for the transaction (the "charge amount" $C_C$), the audit module 52 may further determine an expected value of blocking the transaction. For example, the audit module 52 may cause issuance of an airline ticket being sold by the online travel agency to be blocked. Blocking issuance of the ticket may result in the traveler: (1) booking the ticket for the audit amount $C_A$, in which case the validating carrier receives increased revenue; (2) booking the ticket through a different validating carrier, in which case the validating carrier blocking the transaction loses the commission; or (3) deciding not to book the ticket, in which case the online travel agency, validating carrier, and operating carrier may each lose revenue. Audit parameters 60, 62 that may be used to determine the expected value of blocking the transaction may include a probability $P_L$ of losing the sale, and a probability $P_S$ that the traveler will switch to a different validating carrier.

The data collection module 56 may collect data useful for determining: (1) the effectiveness of preventive actions; (2) transaction parameters that may be used to define transaction types so that transactions may be grouped by type; (3) pricing error rates for the defined transaction groups so that groups that have a high incidence of fraud or mistakes can be audited at a higher rate than other transaction groups; (4) a percentage of transactions belonging to the other groups that should be randomly audited to generate empirical data on low-risk transaction types; and (5) costs relating to performing auditing functions, such as per action Information Technology (IT) costs. Parameters that may be used to define transaction types may include an identity of the indirect sales channel, an identity of a particular office of the indirect sales channel, an amount collected for the transaction, a price that should have been charged for the travel product, the type of ticket or other travel product in question, the cost of the ticket, the identity of the operating carrier, or any other parameter that defines a characteristic of the transaction or the ticket being sold. Each transaction type may be defined by a set of selected parameters, with each parameter in the set having an allowable value or range of values. Transactions may be classified as belonging to the transaction type if the values of the parameters of the transaction fall within the allowable parameter values that define the transaction type. Depending on how the transaction types are defined, a transaction may belong to more than one transaction type.

Groups of transactions may also be defined based on parameters that define a source of the transaction (e.g., online, offline, or identity of the indirect seller), a characteristic of the ticket sold (e.g., by city pair, fare, type of travel, airline, etc.), and the type of action taken (e.g., blocking a transaction, issuing an agency debit memo, interline bill, first or second rejection memo, or inquiry). Estimated costs, audit accuracies, and probabilities may be then determined based on the group to which the transaction belongs. This segmentation of audit parameters into groups of transaction types may allow more accurate determinations of expected values.

Preventive actions may include actions intended to reduce the incidence of incorrect pricing of travel products and/or fraud in future audit periods. Examples of preventive actions may include, but are not limited to: (1) e-mail campaigns warning agencies and/or operators of common mistakes or fraud, and (2) providing additional training to booking agents on properly pricing tickets and/or spotting fraud. The preventive effect may be quantified as an estimated percentage reduction in discrepancies $V$ for transactions having similar characteristics in a future audit period. A unit cost of the preventive action may be determined based on a number of factors such as the number of booking agents targeted and the scope of the action. Preventive effects may also be determined for online and offline actions to recover discrepancies.

The audit parameters may be classified, or segmented, based on parameters that define one or more characteristics of the transaction in question. That is, the probability and cost data used by the audit module 52 may be defined independently for transactions or audit scenarios having different characteristics. For example, the probability $P_D$ that the travel agency will dispute an agency debit memo may be different depending on the identity of the travel agency, the type of ticket in question, the cost of the ticket, the identity of the operating carrier, the amount of the discrepancy $V$ determined by the audit module 52, or any other suitable parameter defining a characteristic of the transaction or audit scenario being evaluated.

The audit parameters 60, 62 may be entered into the audit module 52 for each segment, or as a global value that applies across a plurality of segments. That is, a separate cost or probability value may be entered for each segment defined in the audit module 52, or some or all of the cost and probability values may apply to some or all segments defined in the audit module 52. The audit parameters 60, 62 may be selected manually, and/or may be selected automatically based on empirical data collected by the data collection module 56. For example, the audit parameters 60, 62 may include average values determined for parameters within each segment based on the results of audits during one or more previous audit periods.

At the end of the auditing period, the optimizer module 54 may determine which transaction types should be audited based on auditing costs and values obtained from auditing transactions in the previous audit period. The optimizer module 54 may then provide updated audit parameters 62 based on this determination. Because empirical data may not be available prior to the first audit period, the optimizer module 54 may be unable to provide audit parameters that allow the audit module 52 to accurately determine which transaction types should be audited during the first audit period. To address this issue, the audit module 52 may be configured to audit all transactions during the first audit period to collect empirical data across a wide variety of audit scenarios and transaction types. Auditing decisions in subsequent auditing periods may then be based on this empirical data.

In subsequent audit periods, the audit module 52 may determine that certain audit scenarios including certain transaction types historically provide a negative value. Thus, optimum revenue may be realized if transactions having characteristics consistent with these unprofitable audit scenarios were to go unaudited as a group in future audit periods. However, if the audit module 52 is configured to only audit transaction types identified as being likely to provide a positive value, new empirical data would only be collected for transaction types falling into these optimal audit groups. The auditing rules optimizer system 50 could therefore lack the ability to spot new trends in billing errors or fraud that only affected transaction types which were previously considered unprofitable to audit. The scope of the transactions examined by the auditing rules optimizer system 50 would therefore have a tendency to shrink over time.

To address this potential issue, the audit module 52 may be configured to audit sample transactions from groups including transaction types that have negative expected values. In this way, the auditing rules optimizer system 50 may be configured to gather data on transactions across a complete cross-section of transaction types. This data may enable the scope of transactions that are audited in future audit periods to change as the causes of billing errors evolve.

The data collection module 56 may collect data relating to the costs of each task performed or action taken. This data may be classified at the ticket and operator level to facilitate defining transaction types and generating the operator efficiency metrics 66. The cost data may be measured by the optimizer module 54 or some other suitable module. The data collection module 56 may also collect data relating to audits performed, memos disputed and the results thereof, interline billings rejected (including 1st and 2nd rejections), and final results of a series of interline rejection memos. The data collection module 56 may also collect data relating to passenger name records.

Transaction types may be defined based on ticket classifications. These ticket classifications may be defined to group tickets based on the characteristics of the ticket. Ticket characteristics may correspond to the parameters used to determine if a transaction should be audited, or that identify when an online action should be taken, such as blocking the sale of a ticket. The data collection module 56 may aggregate collected data based on the classification of the ticket. Total revenues that would be realized with perfect pricing may then be determined as equal to the sum of actual sales and the discrepancies $V$ recovered, minus lost sales due to blocking of online transactions.

The data collection module 56 may be configured to associate collected data to a specific operator involved in the underlying transaction. This may enable the value tracking module 58 to provide the operator efficiency metrics 66. The operator efficiency metrics 66 may facilitate monitoring performance of operators to identify operators who could benefit from remediation actions. The data provided by the data collection module 56 may also be used to determine if the current optimizer parameters are accurate. To this end, the data collection module 56 may provide data used to generate the updated optimizer parameters 64. This data may include a unit cost per type of task performed or action taken (e.g., issuance of an agency debit memo, interline bill, rejection memo, dispute, inquiry, etc.), probabilities that agency debit memos will be disputed, probabilities of receiving rejection memos, probabilities of lost sales or validating carrier switches by travelers in response to blocking an online transaction, and data relating to expected reductions of discrepancies $V$ in future audit periods as a result of audits performed or preventive actions taken in the current audit period.

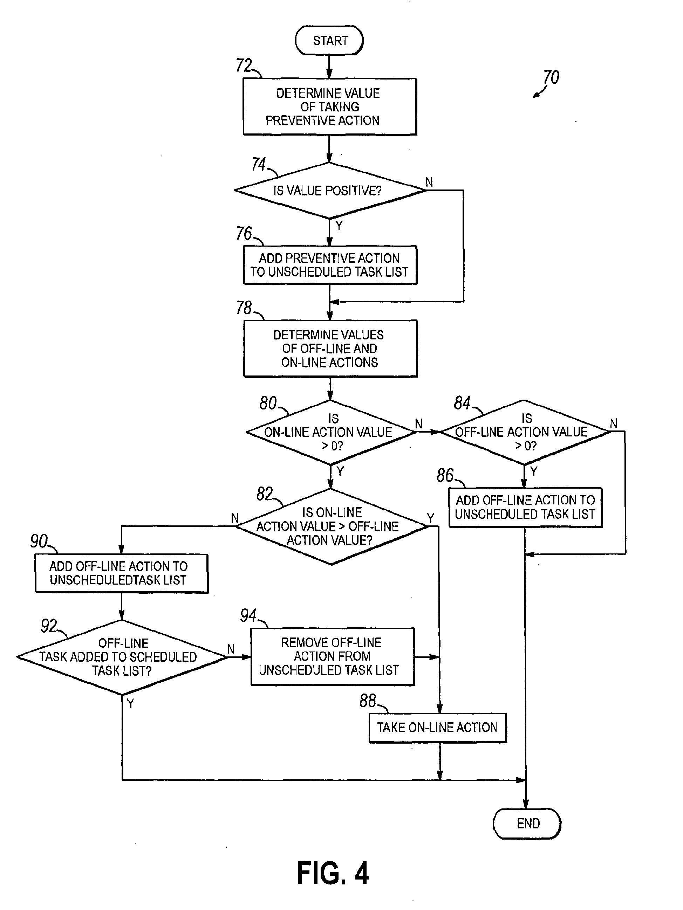

Referring now to FIG. 4, a flow chart is presented that depicts an optimization process 70 that may be performed by the auditing rules optimizer system 50 in response to determining that a transaction is to be audited. In block 72, the auditing rules optimizer system 50 determines an expected value $V_{PA}$ of taking a preventive action. The preventive action may include issuing a notification regarding a specific type or group of transactions, or providing training regarding a particular type of error or fraudulent activity to a system operator. The expected value $V_{PA}$ may be provided by:

$$V_{PA} = T \times R \times Y \times V_{0::n} - C_{PA} \quad \text{(Equation 1)}$$

where T is an estimated duration of the preventive effect provided by the action (e.g., a number of years or audit periods), R is a discount rate used to determine the present value of the prevented discrepancy $V$, $Y$ is an estimated percentage of future discrepancies prevented for the type or group of transactions, $V_{0::n}$ is an accumulated value of discrepancies prevented for the group of transactions under consideration by the preventive action, and $C_{PA}$ is the cost of the preventive action. The accumulated value of discrepancies prevented may be provided by:

$$V_{0::n} = \sum_{0}^{n} V_i \quad \text{(Equation 2)}$$

The cost $C_{PA}$ may be a fixed cost or may vary depending on the characteristics of the preventive action. The cost of the preventive action $C_{PA}$ may also be an expected cost determined based on an average cost of previous preventive actions taken. For example, an e-mail campaign may have a relatively fixed cost, while operator training may vary depending on the office involved and how many operators are to be trained.

In block 74, the auditing rules optimizer system 50 may determine if the expected value $V_{PA}$ is greater than zero. That is, would performing the preventive action in question provide an expected positive return taking into account the expected costs and future reductions in pricing errors? In response to determining that the preventive action produces a positive expected value $V_{PA}$ ("YES" branch of decision block 74), the auditing rules optimizer system 50 may proceed to block 76 and add the preventive action to an operator task list before proceeding to block 78. This operator task list may be a list of tasks that are to be assigned to one or more operators for execution based on a priority ranking system that ranks tasks based on a value assigned to the task. This value may be, for example, an expected benefit density value of the task. In response to determining that the preventive action does not have a positive expected value $V_{PA}$ ("NO" branch of decision block 74), the auditing rules optimizer system 50 may proceed to block 78.

In block 78, the auditing rules optimizer system 50 may determine an expected value $V_{OFF}$ of taking an appropriate offline action (e.g., issuing an agency debit memo, issuing an interline bill, issuing a rejection memo, or instigating an inquiry into a dispute or rejection memo). If the transaction is an online transaction, the auditing rules optimizer system 50 may also determine an expected value $V_{ON}$ for taking an appropriate online action (e.g., blocking the sale of an airline ticket being offered by an online travel agency).

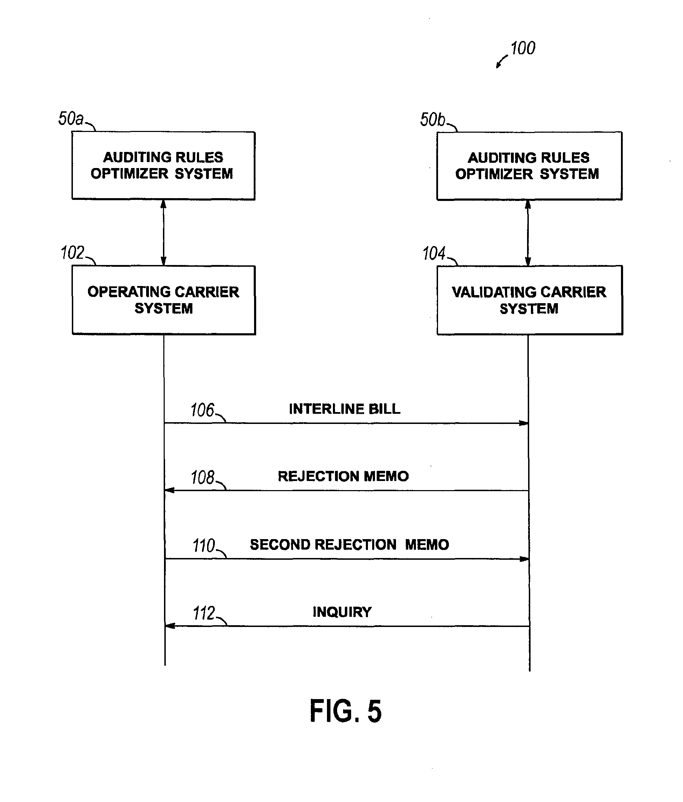

The process of determining $V_{OFF}$ may vary depending on whether the action is a first offline action or a later offline action, and what type of first action is involved. Examples of first actions may include: (1) the operating carrier issuing an interline bill to the validating carrier, commonly referred to as "interline outward billing", (2) the validating carrier issuing a rejection memo to the operating carrier, commonly referred to as "interline inward billing"; and (3) the validating carrier issuing the agency debit memo to the online travel agent. Later offline actions may include the operating carrier system issuing a second rejection memo, the validating carrier issuing an inquiry in response to receiving the second rejection memo, and the online travel agency disputing the agency debit memo. The determination of $V_{OFF}$ is described in more detail below with respect to FIG. 5.

If the transaction being audited is a pending transaction, such as an online transaction that has yet to be completed, the optimization process 70 may determine the expected value $V_{ON}$ for executing an online action. In this scenario, if no action is taken, the online transaction may be completed for the charge amount $C_C$ offered by the online travel agency. Another option is to take the online action and block the transaction. This online action may be taken in response to the audit module 52 determining that there is a sufficient positive discrepancy $V$ between the charge amount $C_C$ and the audit amount $C_A$. If the sale of the ticket is blocked, the traveler may book the ticket for the audit amount $C_A$, resulting in an increase in revenue above the charge amount $C_C$ by the discrepancy $V$. However, in response to blocking the sale at the charge amount $C_C$, the traveler may also book the flight with a different validating carrier at the charge amount $C_C$, or decide not to book the flight.

If the traveler books the ticket with the different validating carrier instead of the validating carrier blocking the sale, the validating carrier blocking the sale will lose the commission. In the case where the validating carrier is also the operating carrier, the carrier may incur an interline service charge due to the switch to the different validating carrier. That is, when the operating carrier is not the validating carrier, the operating carrier may pay a percentage of the pre-tax fare to the validating carrier. The interline service charge is a fee paid by the operating carrier to the validating carrier for issuing the ticket. Typically, this fee is calculated as a percentage of the pre-tax fare charged for the ticket. Thus, if the traveler switches to the different validating carrier in response to the sale being blocked, the revenue may be reduced by interline service charge amount $C_{ISC}$. Therefore, if the traveler books the ticket through the different validating carrier in response to the transaction being blocked, executing the online action may result in less revenue than if no action had been taken. Likewise, if the traveler decides not to book the ticket, executing the online action may result in a complete loss of revenue.

The expected value of blocking the online sale may be provided by:

$$(1 - P_L - P_S) \times (C_C + V) + P_S \times (C_C - C_{ISC}) \quad \text{(Equation 3)}$$

where $P_L$ is the probability that the sale will be lost in response to blocking the transaction, and $P_S$ is the probability that the traveler will book the ticket through the different validating carrier. The expected value of doing nothing is simply the charge amount $C_C$. The expected value $V_{ON}$ of taking the online action is the expected value of executing the online transaction minus the charge amount $C_C$, which may be provided by:

$$V \times (1 - P_L - P_S) - P_L \times C_C - P_S \times C_{ISC} \quad \text{(Equation 4)}$$

Thus, whether or not the expected value $V_{ON}$ of taking the online action is positive may be determined based on the value of the discrepancy $V$, the probabilities $P_L$ and $P_S$, the charge amount $C_C$, and the interline service charge amount $C_{ISC}$.

In cases where the online transaction is blocked, and the traveler is either not ticketed or switches to a different validating carrier in response to the online rejection, the data collection module 56 may be configured to: (1) record all passenger name records for which ticket issuance was denied; (2) track future ticket issuance from the validating carrier that denied ticket issuance on the first request; (3) track future ticket issuance from a different validating carrier (e.g., via monitoring of UAC or TCN messages); and/or (4) find any remaining passenger name records generated by transactions in which the ticket was not issued.

In response to determining the expected values of offline action $V_{OFF}$ and online action $V_{ON}$ (if applicable), the optimization process may proceed to block 80. In block 80, the optimization process 70 may determine if the value of $V_{ON}$ is positive. In response to the expected value $V_{ON}$ being positive ("YES" branch of decision block 80), the process may proceed to block 82. In response to the expected value $V_{ON}$ being negative ("NO" branch of decision block 80), the optimization process 70 may proceed to block 84. In an alternative embodiment of the invention, the transaction being audited may not include an online transaction, or the online transaction may have already concluded, so that the online action cannot be taken. In this case, block 80 may be omitted so that the optimization process 70 proceeds directly from block 78 to block 84.

In block 84, the optimization process 70 determines if the offline action has an expected value $V_{OFF}$ greater than zero. In response to the expected value $V_{OFF}$ of the offline action being greater than zero ("YES" branch of decision block 84), the optimization process 70 may proceed to block 86 and add the offline action to an unscheduled task list. In response to the expected value $V_{OFF}$ of the offline action not being greater than zero ("NO" branch of decision block 84), the optimization process 70 may end without scheduling any actions. That is, the end result of the optimization process 70 may be that no action is taken or scheduled with respect to the audited transaction.

In block 82, the optimization process 70 may determine if the expected value $V_{ON}$ of the online action is greater than the expected value $V_{OFF}$ of the offline action. In response to the expected value $V_{ON}$ of the online action being greater than the expected value $V_{OFF}$ of the offline action ("YES" branch of decision block 82), the optimization process 70 may proceed to block 88. In block 88, the optimization process 70 may take the online action. Taking the online action may include, for example, causing the online transaction to be blocked. In response to the expected value $V_{ON}$ of the online action not being greater than the expected value $V_{OFF}$ of the offline action ("NO" branch of decision block 82), the optimization process 70 may proceed to block 90.

In block 90, the optimization process 70 may add the offline task to the unscheduled task list so that the task can be scheduled for execution. The optimization process 70 may then proceed to block 92 and determine if the task has been added to a scheduled task list. The process of adding the task to the scheduled task list may include a task prioritization process that takes into account the amount of human resources available and the value of the task. In response to the task being added to the scheduled task list ("YES" branch of decision block 92), the optimization process 70 may terminate. In response to the task not being added to the scheduled task list ("NO" branch of decision block 92), the process may proceed to block 94. Reasons for the task not being added to the scheduled task list may include insufficient operator staffing levels to complete the task within an allotted time period. In block 94, the optimization process 70 may remove the offline action from the unscheduled task list and proceed to block 88. As described above, in block 88, the optimization process 70 may cause the online action to be taken.

When a ticket sold by a travel agency is audited, actions that may be taken in response to the audit module 52 determining there is a positive discrepancy $V$ between the audit amount $C_A$ and the charge amount $C_C$ include: (1) do nothing and allow the discrepancy $V$ to go uncollected; (2) issue an agency debit memo and if the agency debit memo is disputed, abandon the attempt to collect the discrepancy V; and (3) issue an agency debit memo and if the agency debit memo is disputed, issue an inquiry and settle with the travel agency. To determine which action should be taken, the audit module 52 may compute an expected value of each action. In response to at least one of the actions having a positive expected value, a task schedule may be updated on one or more of the operator systems 18 so that an operator issues the agency debit memo and/or inquiry. These tasks may be ranked by a value/task time ratio, and assigned in order of the ratios and taking in to account the deadline date of the task. The number of tasks assigned may also take into account human resource constraints. Methods, systems, and program products for generating agency debit memos and managing task assignment are described in more detail in the aforementioned U.S. Patent Application Ser. No. 13/926,136.

Referring now to FIG. 5, an action flow diagram 100 depicts a series of actions that may be exchanged by an operating carrier system 102 and a validating carrier system 104. The auditing rules optimizer system 50 may typically operate on one side of the action flow diagram 100. That is, the auditing rules optimizer system 50 may optimize decisions for one of the operating carrier system 102 or validating carrier system 104. For the purposes of illustrating how the auditing rules optimizer system 50 operates with respect to operating and validating carriers, each of the operating carrier system 102 and validating carrier system 104 is shown in communication with an independently operating auditing rules optimizer system 50a, 50b.

The first action of the operating carrier system 102 may be to issue the interline bill 106 to the validating carrier system 104. For transactions involving interline outward billing, the cost $C_F$ of the first action may be assumed to be zero. That is, the expected value $V_{OFF}$ for interline outward billing may always be positive so that interline outward billing occurs for all transactions involving the operating carrier and the validating carrier. The interline bill 106 may be for a ticket sold by the validating carrier for a service provided by the operating carrier. As discussed above, this first action may be taken in all cases where the operating carrier has provided services for a ticket sold by the validating carrier.

In response to the validating carrier system 104 receiving the interline bill 106, the auditing rules optimizer system 50b may determine the expected value $V_{OFF}$ of issuing a rejection memo 108. The rejection memo 108 may be the first action for the validating carrier, and the expected value $V_{OFF}$ may be provided by:

$$V - \frac{C_F}{1 - A \times P_R + (1 - A) \times P_W} \quad \text{(Equation 5)}$$

where $V$ is the discrepancy between the charge amount $C_C$ of the interline bill 106 and the audit amount $C_A$, $C_F$ is the cost of issuing the rejection memo 108, $A$ is the probability the audit amount $C_A$ determined by the audit module 52 of auditing rules optimizer system 50b is accurate, $P_R$ is the probability that the operating carrier will dispute the rejection memo 108 if the rejection memo is based on an accurate audit amount $C_A$, and $P_W$ is the probability that the operating carrier will dispute the rejection memo 108 if the rejection memo 108 is based on an inaccurate audit amount $C_A$. It may be shown that the denominator $(1 - A \times P_R + (1 - A) \times P_W)$ is equal to $A \times (1 - P_R) + (1 - A) \times (1 - P_W)$, which yields the probability that the first action will not be disputed by the receiving party.

In response to the operating carrier system 102 receiving the rejection memo 108, the auditing rules optimizer system 50a may determine the expected value $V_{OFF}$ of disputing the rejection memo 108. The expected value $V_{OFF}$ may be provided by:

$$V - C_I \times \frac{A \times P_R + (1 - A) \times P_W}{A \times P_R} \quad \text{(Equation 6)}$$

where $V$ is the discrepancy between the audit amount and the payment requested by the rejection memo 108, $C_I$ is the cost of issuing the second rejection memo 110, $A$ is the probability the audit amount $C_A$ determined by the audit module 52 of auditing rules optimizer system 50a is accurate, $P_R$ is the probability that the validating carrier will dispute the second rejection memo 110 if the second rejection memo 110 is based on an accurate audit amount $C_A$, and $P_W$ is the probability that the validating carrier will dispute the second rejection memo 110 if the second rejection memo 110 is based on an inaccurate audit amount $C_A$. The numerator in Equation 6 $(A \times P_R + (1 - A) \times P_W)$ may yield a probability that the action will be disputed by the receiving party, which in this case is the validating carrier. If the expected value $V_{OFF}$ is positive, the auditing rules optimizer system 50a may cause the operating carrier system 102 to issue a second rejection memo 110.

The numerator:

$$A \times P_R + (1 - A) \times P_W \quad \text{(Equation 7)}$$

may represent a total probability that the validating carrier will dispute the second rejection memo 110. That is, the numerator may represent the sum of the probability that the second rejection memo is accurate and will be disputed ($A \times P_R$) and the probability that the second rejection memo is inaccurate and will be disputed ($(1 - A) \times P_W$). Thus, the probability $P_D$ that second rejection memo will be disputed by the validating carrier may be determined from the values of $A$, $P_R$, and $P_W$ by Equation 7.

In response to the validating carrier system 104 receiving the second rejection memo 110, the auditing rules optimizer system 50b may determine the expected value $V_{OFF}$ of issuing an inquiry 112 into the validity of the second rejection memo 110. The expected value $V_{OFF}$ of issuing the inquiry 112 may be provided by:

$$V - C_I \times \frac{A \times P_R + (1 - A) \times P_W}{A \times P_R} \quad \text{(Equation 8)}$$

where $V$ is the discrepancy between the audit amount $C_A$ and the charge amount $C_C$ in the second rejection memo 110, $C_I$ is the cost of issuing the inquiry 112, $A$ is the probability the audit amount $C_A$ determined by the audit module 52 of auditing rules optimizer system 50b is accurate, $P_R$ is the probability that the operating carrier will dispute the inquiry 112 if the inquiry 112 is based on an accurate audit amount $C_A$, and $P_W$ is the probability that the operating carrier will dispute the inquiry 112 if the inquiry 112 is based on an inaccurate audit amount $C_A$.

The auditing rules optimizer system 50 may determine the expected value $V_{OFF}$ for executing the offline action by: (1) determining the expected value for taking the first action and not responding if the first action is disputed; (2) determining the expected value of taking first action and responding if the first action is disputed; and (3) selecting the highest of the two expected values as $V_{OFF}$. The expected value $V_{OFF}$ may thereby represent the expected value of taking the most appropriate offline action. The expected value $V_{OFF}$ for the first action may be determined as the maximum of:

$$V_{OFF} = A \times P_R \times (V - C_F - C_I) + A \times (1 - P_R) \times (V - C_F) - (1 - A) \times P_W \times (C_F + C_I)$$
$$+ (1 - A) \times (1 - P_W) \times (V - C_F) \quad \text{(Equation 9)}$$

and

$$V_{OFF} = V \times \left(A \times (1 - P_R) + (1 - A) \times (1 - P_W)\right) - C_F \quad \text{(Equation 10)}$$

where $C_F$ is the cost of the respective first action and $C_I$ is the cost of the respective second action. The expected value $V_{OFF}$ of taking the second action (if necessary) may be determined as the maximum of:

$$V_{OFF} = 0 \quad \text{(Equation 11)}$$

and

$$V_{OFF} = \frac{V \times A \times P_R}{A \times P_R + (1 - A) \times P_W} - C_I \quad \text{(Equation 12)}$$

That is, the second action may be taken in response to receiving a dispute so long as the expected value $V_{OFF}$ provided by Equation 12 is positive.

It is anticipated that preventive actions, online actions, and offline actions may provide a preventive effect. That is, operator training, information campaigns, and audits of inaccurate or fraudulent transactions, and blocking of online transactions during one audit period may cause indirect sellers of travel products to alter their behavior during the next audit period to reduce the occurrence of discrepancies $V$. Quantifying this preventive effect may make it possible to more accurately determine the real value of taking an action. However, prevented errors or frauds do not produce a discrepancy that can be detected by the audit module 52 since the transaction in question has an accurate charge amount $C_C$. Thus, revenue produced by transactions having prevented discrepancies may simply be included in the total sales revenue with the revenue from other accurately priced transactions.

In order to estimate the preventive effect of an action, an assumption may be made that without the action, the error rate for the transaction type in question would have stayed the same from period-to-period. Based on this assumption, period-to-period error rates may be applied to transactions grouped by type. These groups may correspond to the transaction segments defined in the auditing rules optimizer system 50. Determining the error rate within individual transaction segments may be preferred to determining the error rate across a group including all transaction segments. This may be because a reduction of errors across all transactions may reflect a composite effect from different types of errors and preventive actions that are specific to the different segments of transactions. In addition, if the size of these segments changes, the total error rate may change for reasons unrelated to the preventive effect.

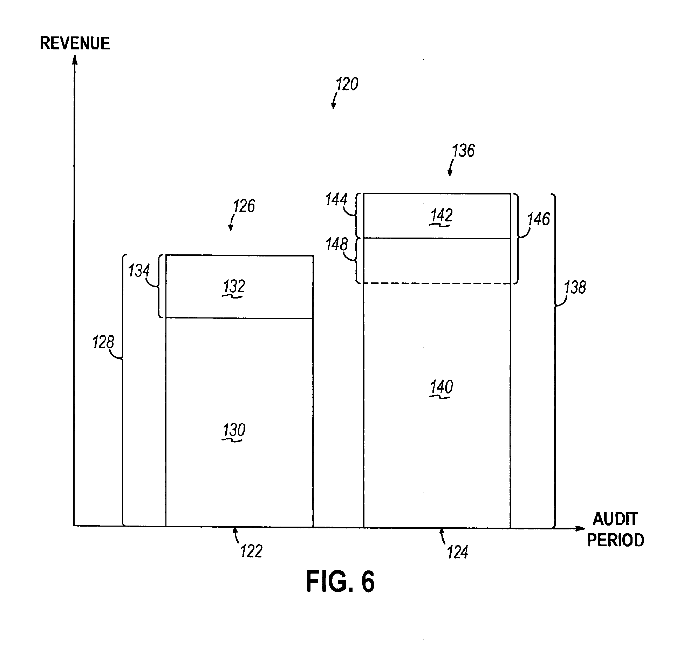

Referring now to FIG. 6, a graph 120 illustrates an exemplary preventive effect between an audit period 122 in which the preventive action has yet to be taken, and an audit period 124 occurring after the preventive action has been taken. A bar 126 located in the earlier audit period 122 has a height representing a total revenue 128 that could have been realized in the earlier audit period 122 had all transactions occurred with perfect pricing. The bar 126 includes a lower portion 130 and an upper portion 132. The lower portion 130 may represent the total revenue realized during the audit period 122 from sales having correct pricing. The upper portion 132 may represent the total revenue that could have been realized for transactions having discrepancies had the pricing for those transactions been correct. The upper portion 132 may include transactions where the discrepancy was recovered and transactions where the discrepancy was not recovered. Thus, the height of the upper portion 132 of bar 126 may represent a total value 134 of transactions having pricing errors assuming the correct amount $C_T$ would have been collected had the transactions been properly priced.

Similarly, a bar 136 located in the later audit period 124 has a height representing a total revenue 138 that could have been realized in the later audit period 124 if all transactions had occurred with perfect pricing. The bar 136 includes a lower portion 140 and an upper portion 142. The lower portion 140 may represent the total revenue realized during the audit period 124 from sales having correct pricing. The upper portion 142 may represent the total revenue that could have been realized for transactions having discrepancies had the pricing been correct. The upper portion 142 may include transactions where the discrepancy was recovered and transactions where the discrepancy was not recovered. Thus, the height of upper portion 142 of bar 136 may represent a total value 144 of transactions having pricing errors assuming the correct amount $C_T$ would have been collected had the transactions been properly priced.

Dividing the total value 134 of the transactions having errors by the total revenue 128 that would have occurred with perfect pricing may provide an error rate E for the earlier audit period 122. Multiplying this error rate E by the total revenue 138 that could have been realized in the later audit period 124 may provide an expected value 146 for transactions having pricing errors in the later audit period 124. A difference between the total value 144 of transactions having pricing errors and the expected value 146 for transactions having pricing errors may provide a total value 148 of discrepancies avoided. Assuming the error rate E would have been consistent between audit period 122 and audit period 124 absent the action taken in the earlier audit period 122, the total value 148 of discrepancies avoided in the later audit period 124 may be attributed to the preventive effect of the action taken in the earlier audit period 122.

The number of discrepancies prevented may be determined by defining a group of transactions that are affected by the preventive action being analyzed. In some cases, this determination may require defining the group to include the affected transaction type and to provide a constant error rate E. The auditing rules optimizer system 50 may then determine the percentage of future discrepancies prevented Y for the action in question based the total value 144 of transactions having pricing errors and the total value 148 of discrepancies avoided. The percentage of future discrepancies prevented Y may then be used to update the expected value of taking the preventive action $V_{PA}$ using Equation 1.

In an embodiment of the invention, the operator efficiency metrics 66 may be provided by the value tracking module 58 of auditing rules optimizer system 50 based on empirical data collected by the data collection module 56. These operator efficiency metrics 66 may indicate that one operator has a lower efficiency than another operator. This may be due to the inefficient operator taking more time to perform a given task than the more efficient operator, or because the inefficient operator performs the task poorly. Operators that perform tasks poorly may generate agency debit memos, interline bills, rejection memos, and/or inquiries that include errors or that are otherwise of substandard quality. Lower quality actions may reduce the expected value of taking the action by: (1) increasing the amount of time that must be spent following up on generation of the memo, bill, and/or inquiry; (2) reducing the value ultimately recovered (e.g., the requested amount was less than what should have been requested); and (3) a substandard document may increase the chances that the receiving party will dispute the document, resulting in increased costs for issuing follow-up memos and inquiries, or loss of the discrepancy V altogether.

Thus, time and quality may impact the value of taking an action so that the expected value of taking the action may be different depending on the operator assigned the task of implementing the action. By enabling task value creation to be tracked on an operator-by-operator basis, the auditing rules optimizer system 50 may improve management of operator efficiency. For example, inefficient operators may be identified based on an average return on the bills, memos, and inquiries they issue lagging an average expected value of taking the action in question. Identifying particular types of actions for which the operator is inefficient may allow training to be targeted to a particular weakness, or may be used to assign tasks to particular operators based on how well the operator handles the task in question. In any case, inefficient operators may be remediated through additional training or replacement if the operator continues to fail to meet objectives.

When estimating the need for operators, it may be necessary to determine the number of tasks that will need to be performed for a given number of transactions. This determination includes uncertainty introduced by a lack of data regarding how a receiving party would have responded to an unissued action. For example, when analyzing historical data, it is not known whether a travel agency would have disputed an agency debit memo that was not issued, or an airline would have rejected a new billing or rejection memo that was not issued. This may be especially problematic in cases where certain groups of transactions have higher rates of non-issuance of first actions. This lack of certainty may also be troublesome when attempting to predict expected workload generated by auditing groups of transactions that were relatively unexamined in earlier audit periods.

To address this issue, workload may be estimated by generating a best case scenario (i.e., no disputes or rejection memos are received) and a worst case scenario (i.e., all possible disputes and rejection memos are received). An approximation of the expected workload may then be determined based on a weighted average of the best and worst case scenario results. In an embodiment of the invention, a task list may be defined based on an assumption regarding whether receiving parties would have disputed actions had they been taken. The task list may be one of a plurality of task lists, and may be defined based on a best-case scenario that assumes that all new agency debit memos and rejection memos issued would not have been disputed by the receiving party had the action been taken. Under this best case scenario, no inquiries may be necessary other than those that were actually issued. Thus, the best case scenario task list may not include any new inquiry generation tasks that were not generated during the historical time period being analyzed.

Another task list may be based on the worst-case scenario which assumes that any new action taken would have been disputed by the receiving party. Thus, the worse-case scenario task list may include inquiry tasks corresponding disputes received for each action having a positive value. Persons having ordinary skill in the art will understand that other task lists may also be defined and analyzed. For example, a task list may be defined that includes inquiry tasks for only a portion of the newly issued agency debit memos and/or rejection memos. The memos disputed may be selected based on the probabilities $P_R$, $P_W$, and A. A task list may also be generated based on a weighted average of the best-case and worst-case lists.

In operation, the auditing rules optimizer system 50 may enable a decision on whether to take an action to be determined based on the expected value of taking the action. This expected value may be determined based on parameters that are updated periodically using empirical data from previous audit periods. To this end, the auditing rules optimizer system 50 may determine an actual unit cost per type of task based on empirical data from previous audit periods. The actual unit cost may be compared to the corresponding estimated cost $C_F$, $C_G$, $C_I$, of taking the action, and the estimated costs adjusted accordingly. The auditing rules optimizer system 50 may also determine actual percentages of actions that are disputed, and compare these percentages to the total probability $P_D$ that the receiving party will dispute the action. The auditing rules optimizer system 50 may determine the percentage of disputed actions in which the audit amount was correct, which may be compared to the probability that the action is accurate and the receiving party disputes the action ($A \times P_R$). The auditing rules optimizer system 50 may also determine the probability $P_L$ that a blocked transaction will be lost, and the probability $P_S$ that a blocked transaction will result in the ticket being booked with another validating carrier. The above parameters may be determined empirically based on the historical data obtained by the data collection module 56, and updated by the value tracking module 58.

The auditing rules optimizer system 50 may thereby adapt to changing market conditions to enable automatic evaluation of the expected value of auditing actions, such as online auditing, preventive actions, and memo management actions. The auditing rules optimizer system 50 may provide a process for objectively determining which transactions should be audited. Once a transaction is selected for auditing, the auditing rules optimizer system 50 may provide a process for deciding on the best remediation action for a given transaction. This decision may be based on estimated values of the remediation action in question, deadlines for taking the action, and human resource constraints on completing the action prior to the deadline.

By basing auditing parameters on empirical data, the auditing rules optimizer system 50 may create a feedback loop after each audit period. This feedback loop may improve monitoring and managing operator efficiency, optimization of the number of human resources deployed, and updating audit optimizer model parameters.

The auditing rules optimizer system 50 may also provide an objective decision making tool for determining which groups of tickets should be audited, thereby optimizing recovered revenue. Once the determination has been made regarding which ticket groups to audit during the next audit period, transactions classified as belonging to one of the selected groups may be audited as a matter of course. In addition, a certain percentage of the transactions belonging to unselected groups may be randomly audited in order to generate empirical data for adjusting auditing parameters for subsequent audit periods. The random audits thereby ensure that new trends in errors or fraudulent behavior will not be missed by relying on static auditing rules.

The program code embodying any of the embodiments of the invention described herein is capable of being individually or collectively distributed as a program product in a variety of different forms. In particular, the program code may be distributed using a computer readable media, which may include computer readable storage media and communication media. Computer readable storage media, which are inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. Communication media may embody computer readable instructions, data structures, or other program modules. By way of example, and not limitation, communication media may include wired media such as a wired network or direct-wired connection, and wireless media such as acoustic, RF, infrared and other wireless media. Combinations of any of the above may also be included within the scope of computer readable media.

The methods described herein can be implemented by computer program instructions supplied to the processor of any type of computer to produce a machine with a processor that executes the instructions to implement the functions/acts specified herein. These computer program instructions may also be stored in a computer readable medium that can direct a computer to function in a particular manner. To that end, the computer program instructions may be loaded onto a computer to cause the performance of a series of operational steps and thereby produce a computer implemented process such that the executed instructions provide processes for implementing the functions/acts specified herein.

In addition, program code described herein may be identified based upon the application or software component within which the program code is implemented in a specific embodiment of the invention. However, it should be appreciated that any particular program nomenclature that follows is used merely for convenience, and thus the invention should not be limited to use solely in any specific application identified and/or implied by such nomenclature. It should be further appreciated that the various features, applications, and devices disclosed herein may also be used alone or in any combination. Moreover, given the typically endless number of manners in which computer programs may be organized into routines, procedures, methods, modules, objects, and the like, as well as the various manners in which program functionality may be allocated among various software layers that are resident within a typical computing system (e.g., operating systems, libraries, APIs, applications, applets, etc.), and/or across one or more hardware platforms, it should be appreciated that the invention is not limited to the specific organization and allocation of program functionality described herein.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising."

While embodiments of the invention have been illustrated by a description of various examples, and while these embodiments have been described in considerable detail, it is not the intention of the applicant to restrict or in any way limit the scope of the appended claims to such detail. Additional advantages and modifications will readily appear to those skilled in the art. The invention in its broader aspects is therefore not limited to the specific details, representative methods, and illustrative examples shown and described. Accordingly, departures may be made from such details without departing from the spirit or scope of applicant's general inventive concept.

In summary, the mechanisms presented herein are characterized by the following aspects:

> 1. A method of selecting which transactions of a plurality of transactions to audit, the method comprising:
>
>> receiving, at a computer, first data relating to a transaction, the transaction being conducted by a first business entity and relating to a travel product provided by a second business entity;
>> parsing, with the computer, the first data into a plurality of parameters, each parameter having a value that defines a characteristic of the transaction;
>> in response to the plurality of parameters matching a first set of parameters corresponding to a first transaction type, classifying the transaction as the first transaction type;
>> in response to the plurality of parameters matching a second set of parameters corresponding to a second transaction type, classifying the transaction as the second transaction type; and
>> determining whether to audit the transaction based at least in part on whether the transaction is classified as the first transaction type or the second transaction type.
>
> 2. The method of aspect 1 wherein determining whether to audit the transaction based at least in part on whether the transaction is classified as the first transaction type or the second transaction type comprises:
>
>> setting a first rate for auditing transactions of the first transaction type; and
>> setting a second rate for auditing transactions of the second transaction type.
>
> 3. The method of aspect 2 wherein the first rate is unity and the second rate is less than unity.
>
> 4. The method of any of aspects 1 to 3 further comprising:
>
>> determining a preventive effect of auditing the transaction,
>> wherein determining whether to audit the transaction is based at least in part on the preventive effect.
>
> 5. The method of aspect 4 wherein determining the preventive effect comprises:

defining, in a database of audit data, a first plurality of transactions audited during a first period of time;
defining, in the database of audit data, a second plurality of transactions audited during a second period of time occurring after the first period of time;
for the first plurality of transactions, determining a first error rate equal to a first percentage of audited transactions having pricing errors;
for the second plurality of transactions, determining a second error rate equal to a second percentage of audited transactions having pricing errors; and
defining the preventive effect based on a difference between the first error rate and the second error rate.

6. The method of any of aspects 1 to 5 wherein the plurality of parameters is selected from the group consisting of a type of the travel product, a price charged for the travel product, a price that should have been charged for the travel product, a cost of the travel product, an identity of the first business entity, and an identity of the second business entity.

7. The method of any of aspects 1 to 6 further comprising:

in response to receiving second data relating to an audit of the transaction, storing the second data in a database containing audit data.

8. The method of aspect 7 further comprising:

in response to auditing the transaction, determining a discrepancy between a first price parameter of the transaction and a second price parameter of the travel product;
determining an expected value of taking an action based on the discrepancy and the audit data stored in the database; and
taking the action if the expected value exceeds a threshold.

9. The method of aspect 7 or aspect 8 further comprising:

determining a first average value of auditing transactions of the first transaction type based on the audit data in the database;
determining a second average value of auditing transactions of the second transaction type based on the audit data in the database;
setting a first rate for auditing transactions of the first transaction type based at least in part on the first average value; and
setting a second rate for auditing transactions of the second transaction type based at least in part on the second average value.

10. An apparatus comprising:

a processor; and
a memory including instructions that, when executed by the processor, cause the apparatus to:

receive first data relating to a transaction, the transaction being conducted by a first business entity and relating to a travel product provided by a second business entity;
parse the first data into a plurality of parameters, each parameter having a value that defines a characteristic of the transaction;
in response to the plurality of parameters matching a first set of parameters corresponding to a first transaction type, classify the transaction as a first transaction type;
in response to the plurality of parameters matching a second set of parameters corresponding to a second transaction type, classify the transaction as a second transaction type; and
determine whether to audit the transaction based at least in part on whether the transaction is classified as the first transaction type or the second transaction type.

11. The apparatus of aspect 10 wherein the instructions further cause the apparatus to:

determine a preventive effect of auditing the transaction, wherein determining whether to audit the transaction is based at least in part on the preventive effect.

12. The apparatus of aspect 11 wherein the instructions further cause the apparatus to:

define, in a database of audit data, a first plurality of transactions audited during a first period of time;
define, in the database of audit data, a second plurality of transactions audited during a second period of time occurring after the first period of time;
for the first plurality of transactions, determine a first error rate equal to a percentage of audited transactions having pricing errors; and
for the second plurality of transactions, determine a second error rate equal to a percentage of audited transactions having pricing errors, wherein the preventive effect is determined based on a difference between the first error rate and the second error rate.

13. A computer program product comprising:

a non-transitory computer readable storage medium; and
instructions stored on the non-transitory computer readable storage medium that, when executed by a processor, cause the processor to:

receive first data relating to a transaction, the transaction being conducted by a first business entity and relating to a travel product provided by a second business entity;
parse the first data into a plurality of parameters, each parameter having a value that defines a characteristic of the transaction;
in response to the plurality of parameters matching a first set of parameters corresponding to a first transaction type, classify the transaction as a first transaction type;
in response to the plurality of parameters matching a second set of parameters corresponding to a second transaction type, classify the transaction as a second transaction type; and
determine whether to audit the transaction based at least in part on whether the transaction is classified as the first transaction type or the second transaction type.

14. A method of optimizing revenue for a transaction being conducted by a first business entity, the transaction relating to a travel product provided by a second business entity, the method comprising:

receiving, at a computer, data relating to the transaction, the data including data indicative of a first amount being quoted for the travel product by the first business entity;
in response to the first amount being less than a second amount charged for the travel product by the second business entity, determining a first expected value of blocking the transaction;
determining a first difference equal to the first expected value minus the first amount; and
in response to the first difference being greater than a threshold, blocking the transaction.

15. The method of aspect 14 wherein determining the first expected value of blocking the transaction comprises:

determining a first probability that, if the transaction is blocked, the transaction will be completed by the first business entity at the second amount;
determining a second probability that, if the transaction is blocked, the transaction will be completed at the first amount by a third business entity that collects a service charge for completing the transaction;
determining a third amount by multiplying the first probability by the second amount;
determining a fourth amount by multiplying the second probability by a second difference equal to the first amount minus the service charge; and
setting the first expected value equal to a sum of the third amount and the fourth amount.

16. The method of aspect 14 or aspect 15 further comprising:

determining a second expected value of allowing the transaction to complete at the first amount and disputing the transaction offline;
determining a second difference equal to the second expected value minus the first amount;
in response to the second difference being positive, setting the threshold equal to the second difference; and
in response to the second difference not being positive, setting the threshold equal to zero.

17. The method of aspect 16 further comprising:

in response to the second difference being positive and greater than the first difference, adding a first task to remediate the transaction to a task list, wherein the tasks on the task list are to be completed offline.

18. The method of aspect 17 further comprising:

ranking each task of the task list based on an expected benefit density value of the task in order of decreasing value;
scheduling each task of the task list in order of rank so that tasks having the highest expected benefit density value are scheduled first;
in response to not being able to schedule the first task due to a lack of resources, removing the first task from the task list; and
in response to the first task being removed from the task list and the first difference being positive, blocking the transaction.

19. An apparatus comprising:

a processor; and
a memory including instructions that, when executed by the processor, cause the apparatus to:

receive data relating to a transaction being conducted by a first business entity, the data including data indicative of a first amount being quoted for a travel product provided by a second business entity, the first amount being quoted by the first business entity;
in response to the first amount being less than a second amount charged for the travel product by the second business entity, determine an expected value of blocking the transaction;
determine a first difference equal to the expected value minus the first amount; and
in response to the first difference being greater than a threshold, block the transaction.

20. The apparatus of aspect 19 wherein the instructions cause the apparatus to determine the expected value of blocking the transaction by:

determining a first probability that, if the transaction is blocked, the transaction will be completed by the first business entity at the second amount;
determining a second probability that, if the transaction is blocked, the transaction will be completed at the first amount by a third business entity that collects a service charge for completing the transaction;
determining a third amount by multiplying the first probability by the second amount;
determining a fourth amount by multiplying the second probability by a second difference equal to the first amount minus the service charge; and
setting the expected value equal to a sum of the third amount and the fourth amount.

21. A computer program product comprising:

a non-transitory computer readable storage medium; and
instructions stored on the non-transitory computer readable storage medium that, when executed by a processor, cause the processor to:

receive data relating to a transaction being conducted by a first business entity, the data including data indicative of a first amount being quoted for a travel product provided by a second business entity, the first amount being quoted by the first business entity;
in response to the first amount being less than a second amount charged for the travel product by the second business entity, determine an expected value of blocking the transaction;
determine a first difference equal to the expected value minus the first amount; and
in response to the first difference being greater than a threshold, block the transaction.

22. A method of interline auditing, the method comprising:

receiving, at a computer, data relating to an interline bill from an operating carrier, the interline bill including a first amount;
determining a probability that a rejection memo will not be disputed by the operating carrier;

determining a second amount equal to a cost of issuing the rejection memo divided by the probability; and
in response to the first amount exceeding the second amount by a discrepancy, causing the rejection memo to be issued to the operating carrier.

23. An apparatus comprising:

a processor; and
a memory including instructions that, when executed by the processor, cause the apparatus to:

receive data relating to an interline bill from an operating carrier, the interline bill including a first amount;
determine a probability that a rejection memo will not be disputed by the operating carrier;
determine a second amount equal to a cost of issuing the rejection memo divided by the probability; and
in response to the first amount exceeding the second amount by a discrepancy, cause the rejection memo to be issued to the operating carrier.

24. A computer program product comprising:

a non-transitory computer readable storage medium; and
instructions stored on the non-transitory computer readable storage medium that, when executed by a processor, cause the processor to:

receive data relating to an interline bill from an operating carrier, the interline bill including a first amount;
determine a probability that a rejection memo will not be disputed by the operating carrier;
determine a second amount equal to a cost of issuing the rejection memo divided by the probability; and
in response to the first amount exceeding the second amount by a discrepancy, cause the rejection memo to be issued to the operating carrier.

25. A method of interline auditing, the method comprising:

receiving, at a computer, data relating to a rejection memo sent by a validating carrier in response receiving an interline bill for a first amount from an operating carrier;
determining a first probability that a rejection memo inquiry will be disputed by the validating carrier;
determining a second probability that the interline bill is accurate and that the rejection memo inquiry based on the accurate interline bill will be disputed by the validating carrier;
determining a second amount equal to a cost of issuing the rejection memo inquiry divided by a sum of the first probability and the second probability; and
in response to the first amount exceeding the second amount by a discrepancy, causing the rejection memo inquiry to be issued to the validating carrier.

26. An apparatus comprising:

a processor; and
a memory including instructions that, when executed by the processor, cause the apparatus to:

receive data relating to a rejection memo sent by a validating carrier in response receiving an interline bill for a first amount from an operating carrier;
determine a first probability that a rejection memo inquiry will be disputed by the validating carrier;
determine a second probability that the interline bill is accurate and that the rejection memo inquiry based on the accurate interline bill will be disputed by the validating carrier;
determine a second amount equal to a cost of issuing the rejection memo inquiry divided by a sum of the first probability and the second probability; and
in response to the first amount exceeding the second amount by a discrepancy, cause the rejection memo inquiry to be issued to the validating carrier.

27. A computer program product comprising:

a non-transitory computer readable storage medium; and
instructions stored on the non-transitory computer readable storage medium that, when executed by a processor, cause the processor to:

receive data relating to a rejection memo sent by a validating carrier in response receiving an interline bill for a first amount from an operating carrier;

determine a first probability that a rejection memo inquiry will be disputed by the validating carrier;

determine a second probability that the interline bill is accurate and that the rejection memo inquiry based on the accurate interline bill will be disputed by the validating carrier;

determine a second amount equal to a cost of issuing the rejection memo inquiry divided by a sum of the first probability and the second probability; and

in response to the first amount exceeding the second amount by a discrepancy, cause the rejection memo inquiry to be issued to the validating carrier.

**Claims**

1. A method of selecting which transactions of a plurality of transactions to audit, the method comprising:

receiving, at a computer, first data relating to a transaction, the transaction being conducted by a first business entity and relating to a travel product provided by a second business entity;

parsing, with the computer, the first data into a plurality of parameters, each parameter having a value that defines a characteristic of the transaction;

in response to the plurality of parameters matching a first set of parameters corresponding to a first transaction type, classifying the transaction as the first transaction type;

in response to the plurality of parameters matching a second set of parameters corresponding to a second transaction type, classifying the transaction as the second transaction type; and

determining whether to audit the transaction based at least in part on whether the transaction is classified as the first transaction type or the second transaction type.

2. The method of claim 1 wherein determining whether to audit the transaction based at least in part on whether the transaction is classified as the first transaction type or the second transaction type comprises:

setting a first rate for auditing transactions of the first transaction type; and

setting a second rate for auditing transactions of the second transaction type.

3. The method of claim 2 wherein the first rate is unity and the second rate is less than unity.

4. The method of any of claims 1 to 3 further comprising:

determining a preventive effect of auditing the transaction,

wherein determining whether to audit the transaction is based at least in part on the preventive effect.

5. The method of claim 4 wherein determining the preventive effect comprises:

defining, in a database of audit data, a first plurality of transactions audited during a first period of time;

defining, in the database of audit data, a second plurality of transactions audited during a second period of time occurring after the first period of time;

for the first plurality of transactions, determining a first error rate equal to a first percentage of audited transactions having pricing errors;

for the second plurality of transactions, determining a second error rate equal to a second percentage of audited transactions having pricing errors; and

defining the preventive effect based on a difference between the first error rate and the second error rate.

6. The method of any of claims 1 to 5 wherein the plurality of parameters is selected from the group consisting of a type of the travel product, a price charged for the travel product, a price that should have been charged for the travel product, a cost of the travel product, an identity of the first business entity, and an identity of the second business entity.

7. The method of any of claims 1 to 6 further comprising:

in response to receiving second data relating to an audit of the transaction, storing the second data in a database containing audit data.

8. The method of claim 7 further comprising:

in response to auditing the transaction, determining a discrepancy between a first price parameter of the transaction and a second price parameter of the travel product;
determining an expected value of taking an action based on the discrepancy and the audit data stored in the database; and
taking the action if the expected value exceeds a threshold.

9. The method of claim 7 or claim 8 further comprising:

determining a first average value of auditing transactions of the first transaction type based on the audit data in the database;
determining a second average value of auditing transactions of the second transaction type based on the audit data in the database;
setting a first rate for auditing transactions of the first transaction type based at least in part on the first average value; and
setting a second rate for auditing transactions of the second transaction type based at least in part on the second average value.

10. An apparatus comprising:

a processor; and
a memory including instructions that, when executed by the processor, cause the apparatus to:

receive first data relating to a transaction, the transaction being conducted by a first business entity and relating to a travel product provided by a second business entity;
parse the first data into a plurality of parameters, each parameter having a value that defines a characteristic of the transaction;
in response to the plurality of parameters matching a first set of parameters corresponding to a first transaction type, classify the transaction as a first transaction type;
in response to the plurality of parameters matching a second set of parameters corresponding to a second transaction type, classify the transaction as a second transaction type; and
determine whether to audit the transaction based at least in part on whether the transaction is classified as the first transaction type or the second transaction type.

11. The apparatus of claim 10 wherein the instructions further cause the apparatus to:

determine a preventive effect of auditing the transaction, wherein determining whether to audit the transaction is based at least in part on the preventive effect.

12. The apparatus of claim 11 wherein the instructions further cause the apparatus to:

define, in a database of audit data, a first plurality of transactions audited during a first period of time;
define, in the database of audit data, a second plurality of transactions audited during a second period of time occurring after the first period of time;
for the first plurality of transactions, determine a first error rate equal to a percentage of audited transactions having pricing errors; and
for the second plurality of transactions, determine a second error rate equal to a percentage of audited transactions having pricing errors, wherein the preventive effect is determined based on a difference between the first error rate and the second error rate.

13. A computer program product comprising:

a non-transitory computer readable storage medium; and
instructions stored on the non-transitory computer readable storage medium that, when executed by a processor, cause the processor to:

receive first data relating to a transaction, the transaction being conducted by a first business entity and relating to a travel product provided by a second business entity;

parse the first data into a plurality of parameters, each parameter having a value that defines a characteristic of the transaction;

in response to the plurality of parameters matching a first set of parameters corresponding to a first transaction type, classify the transaction as a first transaction type;

in response to the plurality of parameters matching a second set of parameters corresponding to a second transaction type, classify the transaction as a second transaction type; and

determine whether to audit the transaction based at least in part on whether the transaction is classified as the first transaction type or the second transaction type.

FIG. 1

EP 2 849 136 A1

COMPUTER

MEMORY — 26

OPERATING SYSTEM — 38

APPLICATION — 40

DATA STRUCTURE — 42

USER INTERFACE — 32

PROCESSOR — 24

MASS STORAGE — 28

DATABASE — 36

I/O INTERFACE — 30

22

RESOURCE — 34

NETWORK — 20

**FIG. 2**

FIG. 3

**FIG. 4**

_100_

_50a_
AUDITING RULES
OPTIMIZER SYSTEM

_50b_
AUDITING RULES
OPTIMIZER SYSTEM

_102_
OPERATING CARRIER
SYSTEM

_104_
VALIDATING CARRIER
SYSTEM

_106_ INTERLINE BILL

_108_ REJECTION MEMO

_110_ SECOND REJECTION MEMO

_112_ INQUIRY

FIG. 5

FIG. 6

Europäisches
Patentamt

European
Patent Office

Office européen
des brevets

**EUROPEAN SEARCH REPORT**

Application Number

EP 13 29 0218

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | The claimed subject-matter, with due regard to the description and drawings in accordance with Art. 92 EPC, relates to processes comprised in the list of subject-matter and activities excluded from patentability under Art. 52(2) and (3) EPC, namely a business scheme. The information technology employed as an enabler for carrying out said business scheme amounts to a conventional computer. Its use for carrying out non-technical processes forms part of common general knowledge and it was widely available to everyone at the date of filing of the present application. No documentary evidence is therefore considered necessary. (See Official Journal EPO 11/2007, pages 592ff and 594ff)<br>----- | | INV.<br>G06Q20/40 |
| | | | TECHNICAL FIELDS SEARCHED (IPC) |
| | | | G06Q |

The present search report has been drawn up for all claims

| Place of search | Date of completion of the search | Examiner |
|---|---|---|
| Munich | 9 January 2014 | Reino, Bernardo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 926136 A